# NOUVEAU FASCICULE DE BREVET EUROPEEN

(11) **EP 0 611 787 B2**
(45) Date de publication et mention de la décision concernant l'opposition: **18.10.2006**
(45) Mention de la délivrance du brevet: 07.10.1998
(21) Numéro de dépôt: 94870026.5
(22) Date de dépôt: 10.02.1994
(51) Int. Cl.: C08G 81/02, C08F 8/00, C08L 53/02

(54) **Usage d'agents de couplage pour la décoloration de copolymères séquencés**
Verwendung von Kupplungsmitteln zum Entfärben von Block-Copolymeren
Use of coupling agents for decolorizing block copolymers

(30) Priorité: 15.02.1993 BE 9300142
(43) Date de publication de la demande: 24.08.1994
(73) Titulaire: TOTAL PETROCHEMICALS RESEARCH FELUY, 7181 Seneffe (Feluy) (BE)
(72) Inventeur: Lanza, Emmanuel, B-1410 Waterloo (BE); Naveau, Jean, B-1400 Nivelles (BE)

(56) Documents cités:
- JP-A- 56 090 849
- US-A- 3 281 383
- US-A- 3 639 517
- US-A- 3 801 520
- US-A- 4 051 197
- US-A- 4 120 915
- US-A- 4 239 806
- DATABASE WPI Derwent Publications Ltd., London, GB; AN 87-040124[06] & JP-A-61 296 001 (NIPPON ELASTOMER KK.) 26 Décembre 1986
- Derwent Publications Ltd., London, GB; AN 81-65201D[36] & JP-A-56 090 849 (IDEMITSU PETROCHEM KK. ET AL) 23 Juillet 1981

## Description

La présente invention se rapporte à l'usage d'agents de couplage pour préparer des copolymères séquencés à partir de séquences polymériques. En particulier, la présente invention se rapporte à l'usage d'agents de couplage pour préparer des copolymères séquencés radiaux, formés de séquences polyvinylaromatiques-polydiènes conjugués couplés par un agent de couplage comportant des groupements époxy.

La présente invention se rapporte également à des copolymères séquencés radiaux préparés avec de nouveaux agents de couplage, et ayant des propriétés physiques améliorées par rapport à celles des copolymères séquencés préparés avec les agents de couplage usuels.

Le couplage de chaînes polymères terminées par un atome de lithium (encore appelées polymères de base vivants) est bien connu ainsi que les agents de couplage utilisés à cet effet. Généralement, on fait réagir une chaîne polymère terminée par un atome de lithium avec un composé ayant deux ou plusieurs groupes fonctionnels capables de réagir avec la liaison carbone-lithium de la chaîne polymère terminée par un atome de lithium.

Lorsque l'on désire former des polymères radiaux ou pluribranchés, on utilise des agents de couplage ayant plus de deux sites réactifs ou groupes réactionnels.

Le brevet européen n° 2012 décrit l'utilisation de systèmes d'agents de couplage polyfonctionnels ; on utilise en premier lieu l'addition d'un monomère polyvinylique qui agit comme agent de couplage non-désactivant, et en second lieu un agent de couplage di- ou tri- fonctionnel qui peut être désactivant ou non désactivant. Ce type de système d'agent de couplage conduit à de nombreux branchements difficilement contrôlables.

Le brevet US 4,051,197 décrit le mélange de deux copolymères blocs séquencés obtenus par couplage de copolymères de base monovinylaromatiques et diènes conjugués. Les agents de couplage peuvent être de l'huile époxydée. Lorsque les deux copolymères ont un indice d'hétérogénéité, l'un inférieur à 2.8, l'autre supérieur à 3.5 pour donner un indice de mélange compris entre 2.8 et 3.5, le mélange présente une haute résistance au choc.

Le brevet US 4,239,806 divulgue, pour la fabrication d'adhésifs, une composition comprenant un copolymère bloc obtenu par la polymérisation séquencée de diène conjugué, de styrène et de styrène substitué par des radicaux d'hydrocarbonés. Ces copolymères blocs, lorsqu'ils sont radiaux, ont été couplés par des huiles époxydées ou d'autres agents.

Le brevet US 4,120,915 divulgue un procédé de fabrication d'un terpolymère bloc radial thermiquement stable obtenu par la polymérisation séquencée de styrène, de butadiène et d'isoprène et par le couplage de ces copolymères vivants par une huile époxydée.

Le brevet US 4,304,886 décrit l'utilisation de mélanges d'agents de couplage, quels qu'ils soient, en vue d'obtenir un polymère ayant une fonctionalité globale désirée supérieure à 2 sans devoir mélanger plusieurs polymères. Cependant, ce brevet enseigne que ce système de mélange d'agents de couplage conduit à de moins bonnes propriétés mécaniques.

Le brevet US 3,880,954 décrit l'utilisation d'alkylpolyalkoxysilane comme seul agent de couplage ayant au moins deux et de préférence trois groupes alkoxy; cependant, ce type d'agent ne permet pas à lui seul d'obtenir les propriétés souhaitées et de plus il conduit à la formation de sous-produits gênants tels que les alcools correspondants.

De plus, il est bien connu que le résidu de l'agent de couplage reste dans le copolymère formé et est donc susceptible de laisser des résidus toxiques ou autres produits indésirables dans les polymères, ce qui peut être gênant dans certaines utilisations et notamment dans le domaine de l'emballage alimentaire. Ce phénomène est particulièrement important lorsque l'un des agents de couplage est du tétrachlorure de silicium (SiCl4). En effet, on a remarqué que lorsque l'on utilise le SiC14 comme agent de couplage, il y a formation de chlorure de lithium (LiCl) comme sous-produit; or la présence de LiCl est non seulement détrimentale pour les propriétés optiques des copolymères qui deviennent opaques mais de plus favorise le vieillissement thermique de ces copolymères.

C'est la raison pour laquelle il existe donc un besoin, dans un procédé de préparation de copolymères séquencés, de mettre en oeuvre des agents de couplage ne donnant pas lieu à formation de produits toxiques ou indésirables tout en conservant au moins les propriétés physiques souhaitées et notamment la transparence.

La présente invention a pour objet l'usage, dans la préparation de copolymères vinylaramatiques-diènes conjugués, de nouveaux agents de couplage qui permette d'obtenir des copolymères séquencés ayant des propriétés physiques améliorées, en particulier de meilleures propriétés optiques.

La présente invention a également pour objet l'usage, dans la préparation de copolymères séquencés monovinylaromatiques-diènes conjugués, d'un agents de couplage essentiellement sans toxicité résiduelle.

La production de copolymères séquencés obtenus par couplage de copolymères de base séquencés terminés par un atome de lithium de formule type S-B-Li dans laquelle S est une séquence d'hydrocarbure monovinylaromatique et B une séquence de diène conjugué, est caractérisé selon l'invention en ce que l'on utilise le pentaerythritol tétrallylether époxydé comme agent de couplage comportant 4 groupes époxy par mole et en ce que la séquence S est présente pour un pourcentage pondéral allant de 20 à 60 par rapport au poids des séquences S et B.

Selon la mise en oeuvre de la présente invention, on prépare un copolymère de base séquencé par polymérisation d'un monomère vinylaromatique pour former une première séquence dénommée S, et ce en présence d'un composé organolithium comme catalyseur, et en présence d'un hydrocarbure inerte comme solvant. On ajoute ensuite un monomère de diène conjugué (au milieu réactionnel) pour former un copolymère séquencé du type S-B-Li dans lequel B représente la séquence de diène conjugué.

Comme catalyseur, on utilise généralement des alkyllithium, éventuellement branchés comme les alkyles secondaires, ayant de 3 à 8 atomes de carbone. Cependant, on préfère utiliser le n-butyllithium pour des raisons de facilité d'approvisionnement et de stabilité au stockage.

Comme solvant, on utilise généralement les hydrocarbures paraffiniques, cycloparaffiniques et aromatiques ainsi que leurs mélanges. Par exemple, le n-pentane, le n-hexane, le n-heptane, le 2,2,4-trimethylpentane, le cyclohexane, le cyclopentane, le benzène, le toluène et le xylène. Un solvant polaire tel qu'un éther cyclique (THF) ou acyclique ou une amine tertiaire peut être incorporé afin d'obtenir la formation d'une microstructure polymérique déterminée comme par exemple un taux accru des unités vinyles, ainsi que des séquences S/B statistiques.

A ce stade de la mise en oevre, la Demanderesse a trouvé, d'une manière inattendue, qu'en faisant réagir le copolymère de base séquencé terminé par un atome de lithium, appelé polymère de base vivant, avec du pentaerythritole tetrallylether comprenant 4 groupes époxy par mole comme agent de couplage, de préférence à raison de 0,1 à 1 phr et encore de préférence à raison de 0,2 à 0;75 phr par rapport à l'ensemble des polymères obtenus par couplage, l'on pouvait améliorer les propriétés physiques des polymères séquencés, en particulier les propriétés optiques, tout en évitant d'accroître la toxicité résiduelle.

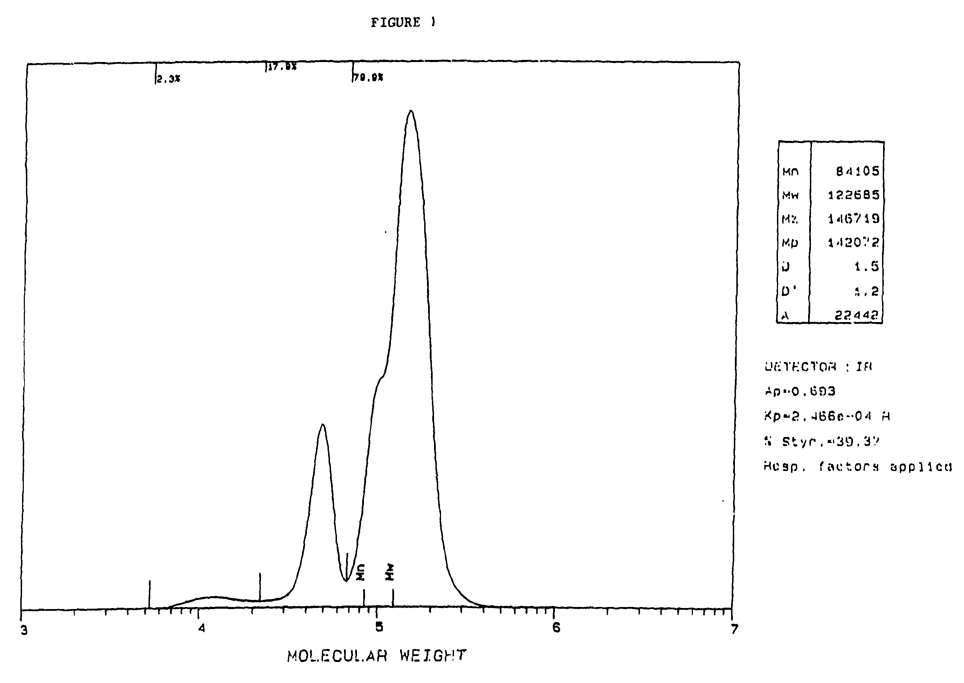

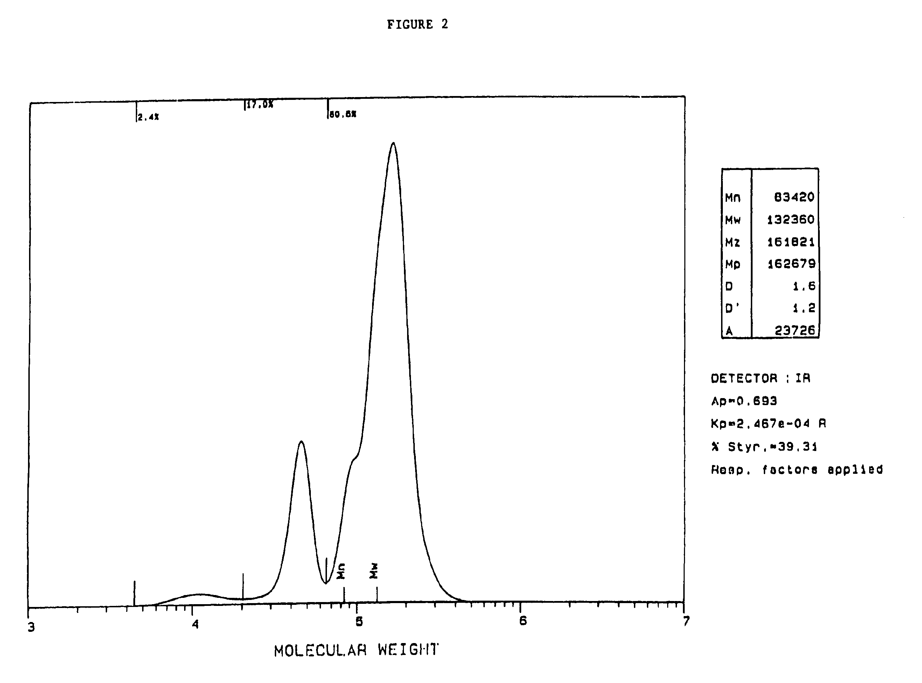

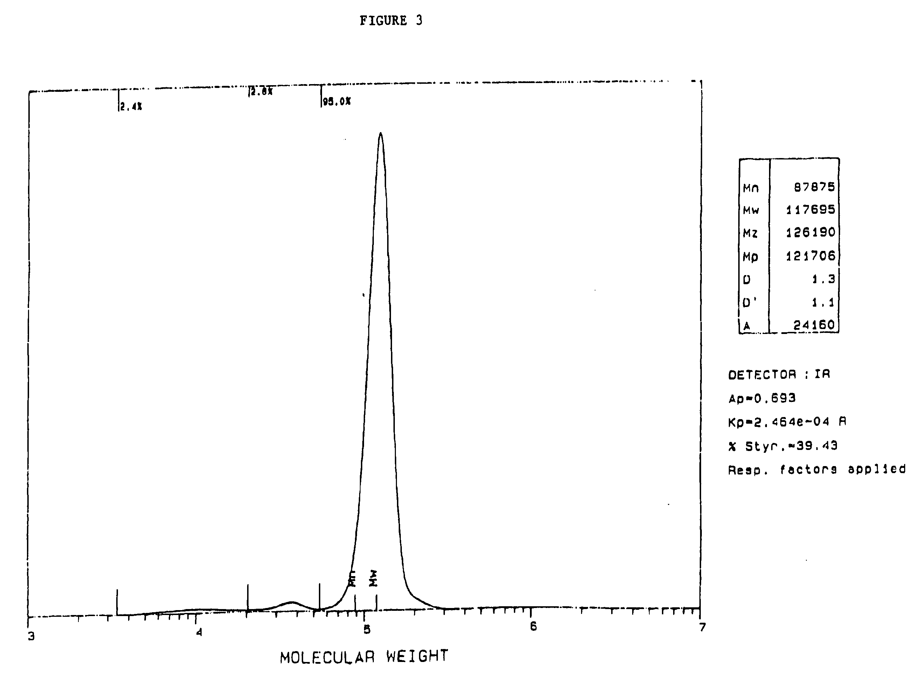

De plus, la Demanderesse a trouvé d'une manière inattendue qu'en utilisant les agents de couplage de la présente invention on obtient des copolymères ayant une distribution de poids moléculaire plus large ce qui améliore leur comportement rhéologique. Les figures 1 à 3 permettent de constater très clairement cet élargissement de poids moléculaire. Ces figures résultent d'une analyse chromatographique parperméation de gel. Les figures 1,2 et 3 correspondent respectivement aux exemples 2, 4 et 6 du tableau 1.

Les quantités d'agent de couplage à mettre en oeuvre sont aisément calculables. En effet, la réaction entre un agent de couplage, ayant un poids moléculaire M₁ et une fonctionnalité n, et des chaînes S-B-Li de poids moléculaire M₂, pris dans un rapport molaire 1 :n, donnera théoriquement un copolymère de poids moléculaire M₁ + nM₂ diminué du poids moléculaire des sous-produits de couplage; les déviations sont dues essentiellement aux traces d'impuretés ou à la chaleur, capables par exemple de désactiver des chaînes S-B-Li (donnant des copolymères de poids moléculaire environ égal à M₁, que l'on retrouve dans le produit final).

Le total des agents de couplage mis en oeuvre est de préférence calculé de manière à coupler la totalité des chaînes S-B-Li, mais on peut en utiliser moins si l'on désire conserver une proportion accrue de copolymères S-B dans le produit final. On constate également que la quantité d'agents de couplage peut varier avec le nombre de groupements époxy.

Le composé vinylaromatique qui constitue le bloc S du copolymère séquencé peut être le styrène, le vinyl toluène, le vinyl xylène, ou le vinyl naphtalène; tandis que les diènes conjugués sont généralement choisis parmi le butadiène, l'isoprène, le méthylisoprène et leurs homologues.

Le copolymère séquencé qui est ainsi formé par le procédé de l'invention se présente sous une forme radiale ou polybranchée.

Le poids moléculaire (poids moléculaire moyen en poids) du copolymère de base peut varier dans de larges limites et est généralement compris entre 10.000 et 150.000, et de préférence entre 15.000 et 100.000, le bloc polyvinylaromatique représentant 20 à 60% en poids, de préférence 30 à 50%, de préférence de l'ordre de 40%, du copolymère de base.

En général, on réalise la mise en oeuvre de l'invention en polymérisant une première séquence de monomère vinylaromatique, le plus souvent de styrène à une température comprise entre 20 et 60°C pendant une période de 20 minutes à 1 heure en présence d'un catalyseur n-alkyllithium, et en présence de cyclohexane comme solvant.

Lorsque l'on a polymérisé tout le monomère vinylaromatique, le plus souvent du styrène, on introduit dans la solution un monomère de diène conjugué comme le 1,3-butadiène. Ce monomère réagit entièrement au départ des extrémités vivantes.

Arrivé à ce stade du procédé, on a formé des chaînes polymériques du type S - B - Li. On introduit alors les agents de couplage tels que définis plus avant.

La réaction de couplage dure de 0,1 à 1 heure à une température comprise entre 10 et 120°C.

Lors de l'étape de couplage, il y a formation d'alcoholates de lithium qui sont greffés aux chaînes polymériques ; bien que ce ne soit pas indispensable, on procède généralement à la neutralisation de ces alcoholates par addition de composé acide.

Après le couplage, on peut désactiver les chaînes polymériques vivantes non-couplées éventuellement présentes par addition d'un terminateur de chaîne usuel comme un alcool ou un polyalkylphénol.

Ensuite, on ajoute un système antioxydant adapté à l'usage final. En principe, il ne devrait pas subsister d'agent de couplage n'ayant pas réagi ; tout excès éventuel n'ayant pas réagi sera transformé en résidus non toxiques lors de l'entraînement du solvant à la vapeur.

Les exemples suivants sont donnés afin de mieux illustrer l'usage d'agents de couplage de la présente invention.

### Exemples de l'état de la technique

On a d'abord polymérisé du styrène en présence de n-butyllithium comme catalyseur et en présence de cyclohexane comme solvant. On a démarré la réaction à une température de 50 à 55°C pour terminer vers une température de 60 à 65°C.

On a ensuite ajouté du 1,3-butadiène avec du cyclohexane comme solvant. On a réalisé cette polymérisation à une température comprise en moyenne entre 60 et 90°C. Lorsque cette polymérisation a été terminée on avait des chaînes vivantes du type S-B-Li.

Les types et les quantités d'agents de couplage que l'on a ensuite ajoutés sont indiqués au tableau 1.

On a réalisé la réaction de couplage pendant 1 heure à 50°C.

Les caractéristiques des copolymères séquencés radiaux obtenus (encore appelé polymère pur) sont indiquées au tableau 1 ci-après.

Il est intéressant de constater que lorsque l'huile de soja est utilisée à une concentration de 0,75 phr (exemple 1) on obtient un index de couplage de 2,4 ; cette concentration a été définie comme étant "stoechiométrique" entre le polymère de base et les groupements fonctionnels représentés uniquement par les 4,4 groupes époxy de l'huile de soja. Par contre, lorsque l'huile de soja est utilisée à une concentration de 0,25 phr (exemple 2) on obtient un index de couplage de 3,9; dans ce cas, cette concentration a été définie comme étant "stoechiométrique" entre le polymère de base et tous les groupements fonctionnels disponibles dans l'huile de soja, à savoir les 4,4 groupes époxy ainsi que les fonctions esters. En considérant ce nombre total de fonctions réactives, on peut dire que l'huile de soja est approximativement décafonctionnelle.

Une observation similaire peut être faite pour l'huile de lin qui est considérée comme 5,8-fonctionnelle dans l'exemple 3 et comme 11,8-fonctionnelle dans l'exemple-4.

Après addition d'antioxydants, les copolymères (provenant des exemples 2,4 et 5) obtenus ont été soumis à un traitement de désolvantisation à la vapeur.
L'évolution au cours du temps des propriétés optiques des copolymères (provenant des exemples 2,4 et 5) est indiquée au tableau 2.
L'évolution au cours du temps de la stabilité thermique des copolymères (provenant des exemples 4 et 5) est indiquée au tableau 3. Ces copolymères ont été soumis à un vieillissement thermique sous air à 80°C en étuve soufflante.

**Tableau 1**

| Exemples | Agent de couplage | | Styrène total | Poids moléculaire | Index de couplage | Mw/Mn |
|---|---|---|---|---|---|---|
| | Type | Concentration | (% poids) | (moyenne en poids) | (c) | |
| | | (phr) | | | | |
| 1 | huile de soja (a) | 0,750 | 40,3 | 64700 | 2,5 | 1,4 |
| 2 | huile de soja (a) | 0,250 | 39,4 | 122685 | 3,9 | 1,5 |
| 3 | huile de lin (b) | 0,575 | 39,4 | 83600 | 2,4 | 1,3 |
| 4 | huile de lin (b) | 0,242 | 39,3 | 132360 | 4,8 | 1,6 |
| 5 | SiCl₄ | 0,153 | 38,8 | 112400 | 3,7 | 1,3 |
| 6 | SiCl₄ | 0,150 | 39,4 | 117695 | 3,9 | 1,3 |

| | | | | | | |
|---|---|---|---|---|---|---|
| (a) l'huile de soja utilisée contient 4,4 groupements époxy par mole. (b) l'huile de lin utilisée contient 5,8 groupements époxy par mole. (c) poids moléculaire final / poids moléculaire du "polymère de base" | | | | | | |

**Tableau 2**

| Exemples | Temps(jours) | Trouble(%) | Transmittance(%) |
|---|---|---|---|
| | | (1) | (1) |
| 2 | 0 | 5,3 | 87,8 |
| | 5 | 5,5 | 88,2 |
| | 10 | 5,7 | 88,4 |
| | 15 | 5,7 | 88,3 |
| | | | |
| 4 | 0 | 9,8 | 89,2 |
| | 5 | 10,1 | 89,0 |
| | 10 | 10,7 | 89,2 |
| | 15 | 10,3 | 89,1 |
| | | | |
| 5 | 0 | 59,5 | 81,5 |
| | 5 | 87,1 | 79,0 |
| | 10 | 86,3 | 78,8 |
| | 15 | 85,1 | 79,6 |

| | | | |
|---|---|---|---|
| (1) norme ASTM D 1003-Cl (Hazemeter type XL211 "hazegard" / Gardner) | | | |

**Tableau 3**

| Exemples | Temps(jours) | Indice de jaune |
|---|---|---|
| | | (1) |
| 4 | 0 | 2,9 |
| | 1 | 3,7 |
| | 3 | 4,3 |
| | 5 | 5,9 |
| | 7 | 6 |
| | 11 | 8 |
| | | |
| 5 | 0 | 3,7 |
| | 1 | 5,7 |
| | 3 | 16,5 |
| | 5 | 25,2 |
| | 7 | 26 |
| | 11 | 40,7 |

| | | |
|---|---|---|
| (1) norme ASTM D 1925 | | |

## Revendications

1. Usage d'au moins un agent de couplage comportant 4 groupements epoxy par mole pour obtenir la decoloration de copolymères séquencés branchés par couplage de copolymères de base séquencés terminés par un atome de lithium de formule type S-B-Li dans laquelle S est une séquence d'hydrocarbure mono-vinylaromatique et B une séquence de diène conjugué, et dans laquelle la sequence S est présente pour un pourcentage pondéral allant de 20 à 60 par rapport au poids des séquences S et B, **caractérisé en ce que** l'agent de couplage est le pentaerythritol tétrallyléther époxydé.

2. Usage selon la revendication 1 **caracterisé en ce que** l'agent de couplage est utilisé à raison de 0,1 à 1 phr par rapport à l'ensemble des polymères obtenus par couplage.

3. Usage selon l'une quelconque des revendications 1 et 2 **caractérisé en ce que** la séquence B de diène conjugué est une séquence de butadiène.

## Claims

1. Use of at least one coupling agent comprising 4 epoxy groups per mole for obtaining the discoloration of block copolymers linked by coupling of basic block copolymers ending with a lithium atom of the formula S-B-Li, wherein S is a sequence of monovinylaromatic hydrocarbon and B is a sequence of conjugated diene and wherein the S-sequence is present in a percentage from 20 to 60 weight percent with reference to the weight of the sequences S and B, **characterized in that** the coupling agent is epoxidized pentaerythritol tetraallyl ether.

2. Use according to claim 1, **characterized in that** the coupling agent is used in a portion of 0.1 to 1 phr in relation to the whole of polymers obtained by coupling.

3. Use according to one of the claims 1 or 2, **characterized in that** the sequence B of conjugated diene is a sequence of butadiene.

## Patentansprüche

1. Verwendung von mindestens einem Kopplungsmittel mit 4 Epoxy-Gruppen pro Mol für die Entfärbung von Blockcopolymeren, die durch Kopplung von Basisblockcopolymeren verbunden sind, die mit einem Lithiumatom der Formel S-B-Li enden, wobei S eine monovinylaromatische Kohlenwasserstoffsequenz und B eine Sequenz von konjugiertem Dien ist und wobei die S-Sequenz zu einem Prozentsatz von 20 - 60 Gewichtsprozent im Vergleich zu dem Gewicht der Sequenzen S und B vorhanden ist, **dadurch gekennzeichnet, dass** das Kupplungsmittel der epoxidierte Pentaerythritol-Tetrallylether ist.

2. Verwendung gemäß Anspruch 1, **dadurch gekennzeichnet, dass** das Kopplungsmittel im Verhältnis 0,1 bis 1 phr in Bezug auf die Gesamtheit der durch die Kopplung erhaltenen Polymere verwendet wird.

3. Verwendung gemäß einem der Ansprüche 1 und 2, **dadurch gekennzeichnet, dass** die B-Sequenz aus konjugiertem Dien eine Butadien-Sequenz ist.
